# EUROPEAN PATENT APPLICATION

(11) **EP 4 023 611 A1**
(43) Date of publication of application: **06.07.2022**
(21) Application number: 21218187.9
(22) Date of filing: 29.12.2021
(51) Int. Cl.: C02F 1/00, C02F 1/44, C02F 1/52, C02F 11/12, C05F 3/00, C05F 3/06

(54) **METHOD AND DEVICE FOR PROCESSING LIQUID MANURE**

(30) Priority: 30.12.2020 NL 2027252
(71) Applicant: LaBaerle Holding BV, 4814 KR Breda (NL)
(72) Inventor: de GROOT, Leonardus Adrianus, 4814 KR Breda (NL)
(74) Representative: Verhees, Godefridus Josephus Maria

(57) **Abstract**

A method for processing liquid manure 1, in particular cattle manure, comprising:
- supplying the liquid manure 1,
- separating 2 the solid parts 14 in the manure from the liquid part 3,
- treatment of the liquid part 3 by:
- adding Magnesium Chloride 5 to convert Phosphates in the liquid part into Struvite, and
- inserting air 6,
- increasing the pH level in the liquid Struvite 7 by Lime injection 9 to convert the Ammonium into Ammonia,
- adding Hydrochloric acid 12 to convert Ammonia into Ammonium Chloride,
- separating Phosphor and Nitrogen containing components from the resulting liquid 18 by reverse Osmose 17,
- mixing 13 the separated Phosphor and Nitrogen containing components 16 with the precipitate Struvite 15 and solid parts 14 resulting from the separation process 2 to get fertilizer 22,
- neutralizing 20 the remaining liquid 19 to get clean water 21.

## Description

### Technical field of the invention

Currently there are national and international discussions about the emission of too many Nitrogen (N) and in specific Ammonia (NH₃) by farmers in the Netherlands. Ammonium (NH₄⁺) is formed when urea from the urine of cows and pigs is degraded by the enzyme urease. This enzyme exists in the feces from the animals. In the liquid manure the amount of ammonium and the amount of ammonia are in equilibrium and this equilibrium shifts dependent on the pH value and the temperature. The ammonia vaporizes from the liquid manure, depending on the amount of ammonia in the air directly above the liquid manure.

Ammonia is a base and a natural component in the atmosphere. In the atmosphere, ammonia will neutralize acids, like nitric acid (HNO₃), hydrochloric acid (HCl) and sulfuric acid (H2SO4), and form ammonium salt particles. Once ammonia enters the soil, it will contribute to the acidification of the soil and to the nitrogen fortification of the environment. Through nitrification in the soil, ammonium will form nitric acid. In this way, ammonia will contribute to the eutrophication, but also to the soil acidification.

### Background of the invention

To neutralize these negative effects, systems are known to manipulate the liquid manure in such a way, that usable environmental neutral products will remain. However, these existing systems do not have a high efficiency and a relatively low capacity.

### Summary of the invention

It is an object of the present invention to design a liquid manure processor, which is capable of manipulating the liquid manure in such a way, that all negative effects from ammonia will be neutralized and phosphate (PO₄³⁻), Nitrogen salts and Potash will be recovered. The method according to the invention is characterized by:
- supplying the liquid manure,
- separating the solid parts in the manure from the liquid part,
- treatment of the liquid part by adding Magnesium Chloride to convert Phosphates in the liquid part into Struvite,
- the resulting precipitate Struvite is mixed with the solid parts resulting from the separation process,
- adding Hydrochloric acid to convert Ammonia into Ammonium Chloride,
- separating Phosphor and Nitrogen containing components from the resulting liquid by reverse Osmose, and
- mixing the separated Phosphor and Nitrogen containing components with the precipitate Struvite and solid parts resulting from the separation process to get fertilizer.

In a continuous process it is prefered to increase the pH level in the liquid Struvite to convert the Ammonium into Ammonia before adding Hydrochloric acid to convert Ammonia into Ammonium Chloride.

During the treatment of the liquid part by adding Magnesium Chloride preferably air is inserted in the liquid to promote the process.

The liquid remaining from the reverse Osmose process is preferably neutralized to get clean water.

The pH level in the liquid Struvite is preferably increased by Lime injection.

The invention also relates to a device for processing liquid manure, in particular cattle manure, comprising:
- a liquid manure storage silo,
- vacuum system configured to transport the liquid manure,
- separating means, for example a screw press or vertical leaf filters,
- a continuous flow Struvite reactor having a dosing unit for adding Magnesium Chloride to convert Phosphates in the liquid part into Struvite,
- an Ammonia converter having an injector for increasing the pH level in the liquid Struvite to convert the Ammonium into Ammonia,
- an Ammonium Chloride reactor having dosing means for adding Hydrochloric acid to convert Ammonia into Ammonium Chloride,
- reverse Osmose means having reverse Osmose membranes separating Phosphor and Nitrogen containing components from the resulting liquid by reverse Osmose, and
- a fertilizer mixer for mixing the separated Phosphor and Nitrogen containing components with the mixed precipitate Struvite and the solid parts resulting from the separation process to get fertilizer.

The device preferable further comprises a neutralizing filter to neutralize the remaining liquid to get clean water.

### Brief description of the drawings

The invention will be further elucidated below on the basis of drawings. These drawings show an embodiment of the method according to the present invention. In the drawings:
Figure 1 is a process flow diagram;
Figure 2 is a slurry pit to slurry silo vacuum system;
Figure 3 is a screw press;
Figure 4 is a solid liquid separation vessels;
Figure 5 is a hydrochloric acid injector; and
Figure 6 is a detailed flow chart of the process.

### Detailed description of the drawings

A reactive process has been designed to treat the liquid manure. This process converts components in the manure with negative impact on the environment, to useable components that can be used as fertilizer. The aim for removing the amount of harmful ingredients is more than 90%.

This process is used to treat slurry cattle manure by reducing nitrogen and phosphate components as polluting components. Reactive treatment will convert polluting nitrogen and phosphate components to a "slow-releasing" fertilizer: Struvite. Excess Nitrogen components are converted to the known and widely used fertilizer; Ammonium Chloride. Furthermore, excess water from the slurry will go through a water purification process which produces clean drinking water. Furthermore, excess water from the slurry will go through a water purification process which produces clean drinking water.

The process will be designed to handle (up-to) a preset capacity corresponding to the manure produced. This preset amount take small and big cattle owning clients into account. Operation of the process is mainly automated and requires low manual input.

### 2. PROCESS DESCRIPTION

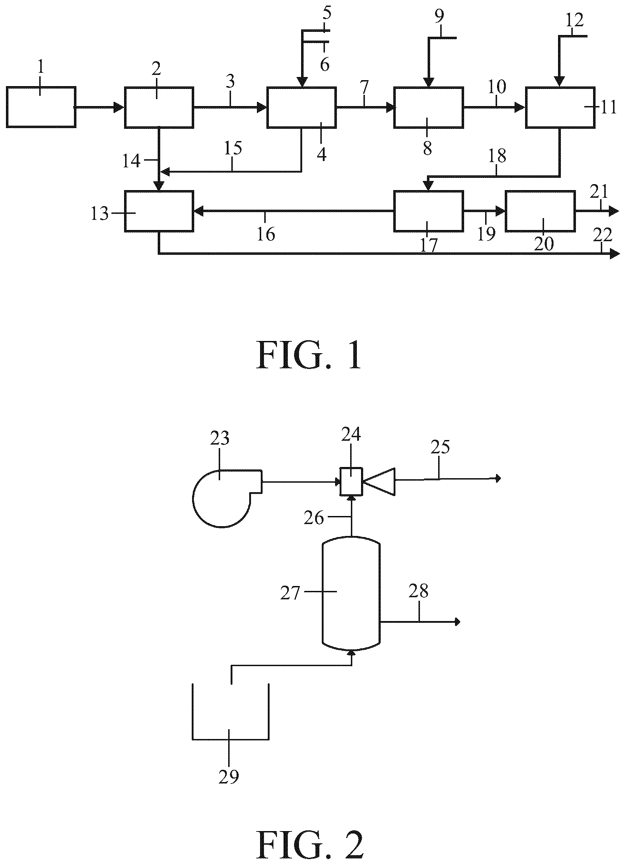

The process steps are schematically shown in Figure 1. All steps shown in the block flow diagram are further elaborated hereafter. In this figure:
- 1: = Feed Manure (Cattle)
- 2: = Solid / Liquid Separation
- 3: = Liquid: Water Ammonia Ammonium Phosphorous Potash
- 4: = Struvite Reactor (Reactive)
- 5: = Magnesium Chloride
- 6: = Aeration (O₂)
- 7: = Liquid: Water Ammonium Ammonia Potash
- 8: = pH Treatment / Ammonium -> Ammonia Conversion (optionally)
- 9: = pH Dosing (optionally)
- 10: = Liquid: Water Ammonia Potash
- 11: = Ammonium Chloride Reactor (Reactive)
- 12: = Hydrochloric Acid
- 13: = Fertilizer Mixing
- 14: = Solids
- 15: = Struvite
- 16: = Liquid: Water Ammonium Chloride Potash
- 17: = Dissolved air flotation / Reverse Osmosis
- 18: = Liquid: Water Ammonium Chloride Potash
- 19: = Water
- 20: = Neutralizing Packed Bed
- 21: = Drinking Water
- 22: = Fertilizer

### 2.1 MANURE SUPPLY

Liquid manure is caught in a slurry pit which is located at slope (below grade) from the cattle housing. Next to the slurry pit is a slurry silo; a vertical drum for storage of manure that functions as the starting location for the treatment process. The slurry is transported from the pit to the slurry silo by a vacuum system. A schematic representation can be seen in Figure 2. In this figure:
- 23: = Air compressor
- 24: = Ejector
- 25: = Air
- 26: = Vacuum
- 27: = Slurry silo
- 28: = Manure
- 29: = Slurry pit

The manure in the silo is further used for the manure treatment process. During emptying of the slurry pit, the downstream processing of the manure will be stopped.

### 2.2 SOLID LIQUID SEPARATION

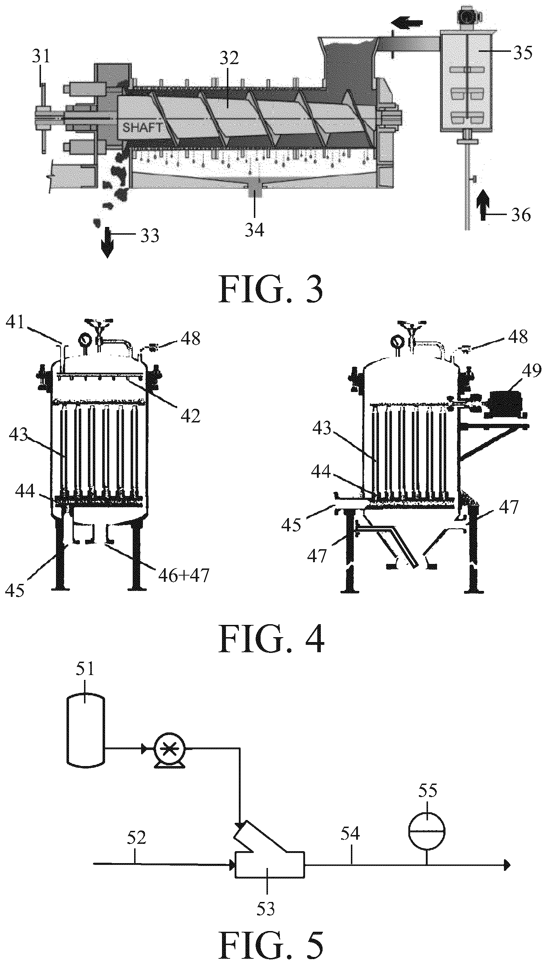

Solid/Liquid separation is done by means of a screw press or a vertical leaf filter. The screw press functions by pushing the slurry through a small mesh mebrane pipe, with the driving force being a screw inside the meshed pipe. Water is pushed through the membrane and the solid part of the manure is pushed to the end of the screwed line, where it is collected in a collection box. A schematic drawing of a screw press can be seen below in Figure 3. In this figure:
- 31: = Drive unit
- 32: = Screw press
- 33: = Cake
- 34: = Pressate
- 35: = Flocculation tank
- 36: = Sludge feed

A screw press performance is selection based; high content of liquid without solid particle carryover means that the separated solid content will have a higher liquid content. Vice versa, a very dry solid after separation will have the liquid contain an amount of solid carryover. Separation favours a dry solid composition as the later reverse osmosis step separates the remaining solid particles from the liquid.

Alternatively, solid liquid separation can be done by means of vertical leaf filters. A vertical leaf filter can separate the solid content from the liquid with a high separation rate. Figure 4 shows solid liquid separation vessels in which vertical tank leaf filters have vertical plates inside a pressure vessel. Filter cake is either discharged wet with spray from above (left), or dry (right). In this figure:
- 41: = Sluice inlet
- 42: = Sluice header
- 43: = Filter plate
- 44: = Outlet manifold
- 45: = Filtrate outlet
- 46: = Feed inlet
- 47: = Tank drain
- 48: = Vent
- 49: = Vibrator

Hanging clothed filters are installed in a pressure vessel. The slurry is pushed through the filters, with the filters catching the solids which will stick to the filters. The liquid is collected and transported for further treatment. Intermittently, the filters need to be cleaned by vibrating the filters and pressurizing them with air. The solid substrate is collected at the bottom of the pressurized vessel.

### 2.3 LIQUID TREATMENT

With most of the nitrogen and phosphate present in the liquid manure, the liquid treatment is where most gains in term of converting said components to useful fertilizing components can be made. The present components in the liquid which will be treated are:
- Ammonium (NH₄⁺)
- Ammonia (NH₃)
- Phosphate (P₂O₅)

Ammonium and ammonia in a solution (water) are in equilibrium in the following reaction:

*H₂O+NH₃ ↔OH⁻* + *NH*₄*⁺*

To produce the slow releasing fertilizer Struvite, the liquid manure must contain ammonium and phosphates. To shift the reaction to the favoured ammonium and subsequently convert said ammonium and phosphorous components present in the liquid manure, the following process steps are included in the liquid treatment and are elaborated on.

### 2.3.1 FERTILIZER CONVERSION

Fertilizer conversion to struvite requires the presence of Ammonium, Phosphate, Magnesium and water. Since Ammonium and phosphate are present, a reaction with magnesium is required to form Struvite. In case of a continuous process the process of Struvite creation can be done by treating the liquid manure in a continuous flow Struvite reactor where Magnesium Chloride (MgCl) is added with a dosing unit. In the Struvite reactor, air will be inserted to start the Struvite creating reaction. The Struvite will form as precipitate and separate from the liquid. The reaction of individual components to Struvite in the can be seen below:

*Mg*₂++*NH*₄*⁺*+ *PO*₄^{3*-*}+ *6H*₂*O→ MgNH*₄*PO*₄ *·6H₂O* ↓

The reaction between the free ions occurs in a 1:1:1 molar ratio of respectively Magnesium, Ammonium and a Phosphate ions in the presence of water. Aeration will happen during the reaction to properly mix the Magnesium Chloride to the influent and increase reaction potential.

### 2.3.2 SEPARATION OF PRECIPITATE STRUVITE

Precipitate Struvite formed in the Struvite reactor is collected from the reactor collection pipe. When removed, the Struvite is inserted into a mixer for final step fertilizer mixing.

### 2.3.3 AMMONIUM CHLORIDE PRODUCTION

Phosphates present in the liquid manure are converted with an equal number of moles of Ammonium to Struvite. Excess Ammonium is still present in the liquid manure stream. To convert leftover nitrogen to usable fertilizer, the ammonium needs to be shifted to Ammonia, and subsequently converted in a Ammonium Chloride reactor to Ammonium Chloride (NH₄Cl) by adding Hydrochloric acid (HCl).

For a continuous flow process the steps of Ammonia shift, pH injection, ,ion exchange by other means or influencing ammonium ammonia equilibrium by other means as described hereafter are preferred. These steps can be omitted in case a batch process is performed.

### 2.3.3.1 AMMONIA SHIFT

The desired nitrogen components for conversive treatment to Ammonium Chloride is Ammonia (NH₃). Since Ammonium and Ammonia exist in equilibrium, and a composition with only Ammonium is desired, the equilibrium reaction must be switched to Ammonium. The equilibrium reaction between Ammonium and Ammonia can be switched with a change in alkalinity, with a lower pH switching the reaction to Ammonium and a higher pH switching the reaction to Ammonia.

There are several possibilities to increase the pH level. In below two sections two common possibilities are discussed. In a later stage, the most effective method will be chosen.

### 2.3.3.1.1 pH Injection

To attain a mostly ammonia containing solution, pH dosing will be added. A separate dosing tank, pump and flow control system is installed that injects Lime into the liquid manure. Lime has no reactive properties with components present in the liquid and will not affect further liquid treatment steps negatively. Excess dosing is removed in a later process step. A schematic representation of the dosing and injection can be seen in Figure 5. In this figure:
- 51: = Acid (TBD)
- 52: = Influent
- 53: = pH Treatment / Acid injector
- 54: = Ammonium Phosphorous
- 55: = PHIT

A small dosing installation is installed, dosing the influent by means of a pump with flow control. The injection is regulated by means of a pH indicating transmitter installed in the influent line downstream the pH injection point. The pH control is automated and provides the proper alkalinity for Ammonium to Ammonia conversion in the liquid manure.

### 2.3.3.1.2 Ion exchange

As alternative to pH injection, more options where ion exchange takes place, such as applying the "common ion" effect or usage of resin to switch the Ammonium content to Ammonia can be used in the process.

### 2.3.3.2 AMMONIUM CHLORIDE REACTOR

With all Ammonium converted to Ammonia, the Ammonia can be converted to Ammonium Chloride with the addition of Hydrochloric acid.

A separate dosing tank, pump and flow control system is installed that injects Hydrochloric acid into the waste water and the liquid stream will pass through a Amonium Chloride reactor. From this reactor the liquid will continue to the Reverse Osmose System.

The reaction between Ammonia and Hydrochloric acid is:

*HCl* + *NH₃* ↔ *NH₄Cl*

### 2.4 SEPARATION BY REVERSE OSMOSIS

The Phosphor, and Nitrogen containing components are converted and can be separated from the liquid waste stream by means of reverse osmosis. Reverse Osmose (RO) is a liquid-driven membrane process, with the reverse Osmose membranes being capable of allowing water to pass through while rejecting solutes, such as salts or low molecular weight organic materials. This means that after the RO process, the ammonium chloride and potash present in the waste water stream are separated from the water present. The water from the reverse osmosis will have very low contamination components left.

The Reverse Osmose depends on acceptance of contamination in either the water stream, or the "fertilizer" stream. When the contamination of components in the water stream is very low, more water will carry over into the "fertilizer" stream during the reverse osmosis. Opposite, when the "fertilizer" is desired as having low water content, more "fertilizer" will go in the water stream.

The desired mode of operation for the reverse osmosis step is focused towards clean water, having water carry over into the "fertilizer" stream. The fertilizer stream can optionally be passed through another reverse osmose membrane for extra water retrieval.

The last step for cleaning the water is done by processing the clean water stream through a neutralizing filter.

The "fertilizer" stream will be directed to the mixer for final step fertilizer mixing.

### 3. UTILITIES

### 3.1 VACUUM

Vacuum will be created by a compressor driving compressed air through an ejector, creating a lower pressure environment in the slurry silo.

### 3.2 MAGNESIUM CHLORIDE PREPERATION

The magnesium chloride will be added to the liquid manure as a dissolved mixture; MgCl₂·6H₂O. The solution will intermittently be prepared by mixing clean water from the downstream reverse Osmose to MgCl₂.

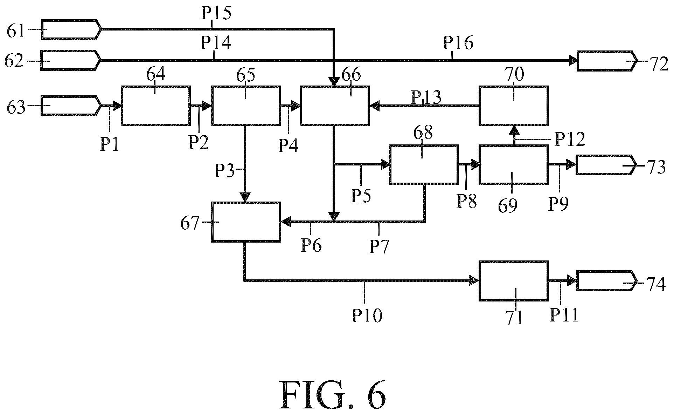

In Figure 6 a flow chart is shown of the complete method to process liquid manure. In this figure:
- 61: = Magnesium Chloride
- 62: = Hydrochloric acid
- 63: = Feed
- 64: = Feed storage
- 65: = Solids separation
- 66: = Ammonia / Phosphate recovery
- 67: = Fertilizer preparation
- 68: = Filtration
- 69: = Water storage
- 70: = Utilities
- 71: = Fertilizer storage
- 72: = Ammonia emission
- 73: = Water
- 74: = Fertilizer
- P1: = from feed to feedstock storage
- P2: = from feedstock storage to solid separation
- P3: = from solid separation to fertilizer preparation
- P4: = from solid separation to Ammonia / Phosphate recovery
- P5: = from Ammonia / Phosphate recovery to filtration
- P6: = from Ammonia / Phosphate recovery to fertilizer preparation
- P7: = from filtration to fertilizer preparation
- P8: = from filtration to water storage
- P9: = from water storage to water
- P10: = from fertilizer preparation to fertilizer storage
- P11: = from fertilizer storage to fertilizer
- P12: = from water storage to utilities
- P13: = from utilities to Ammonia / Phosphate recovery
- P14: = from Hydrochloric acid to Ammonia / Phosphate recovery
- P15: = from Magnesium Chloride to Ammonia / Phosphate recovery
- P16: = from Phosphate recovery to Ammonia emission

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. Method for processing liquid manure (1), in particular cattle manure, comprising:
- supplying the liquid manure (1),
- separating (2) the solid parts (14) in the manure from the liquid part (3),
- treatment of the liquid part (3) by adding Magnesium Chloride (5) to convert Phosphates in the liquid part into Struvite,
- the resulting precipitate Struvite (15) is mixed (13) with the solid parts (14) resulting from the separation process (2),
- adding Hydrochloric acid (12) to convert Ammonia into Ammonium Chloride,
- separating Phosphor and Nitrogen containing components from the resulting liquid (18) by reverse Osmose (17), and
- mixing (13) the separated Phosphor and Nitrogen containing components (16) with the precipitate Struvite (15) and solid parts (14) resulting from the separation process (2) to get fertilizer (22).

2. Method according to claim 1, wherein before adding Hydrochloric acid (12) to convert Ammonia into Ammonium Chloride the pH level in the liquid Struvite (7) is increased to convert the Ammonium into Ammonia.

3. Method according to claim 1 or 2, wherein during the treatment of the liquid part by adding Magnesium Chloride (5), air (6) is inserted in the liquid.

4. Method according to claim 1, 2 or 3, wherein the liquid (19) remaining from the reverse Osmose process is neutralized (20) to get clean water (21).

5. Method according to claim 1, 2, 3 or 4, wherein the pH level in the liquid Struvite (7) is increased by Lime injection (9).

6. Device for processing liquid manure, in particular cattle manure, comprising:
- a liquid manure storage silo (1),
- vacuum system configured to transport the liquid manure,
- separating means (2), for example a screw press or vertical leaf filters,
- a continuous flow Struvite reactor (4) having a dosing unit for adding Magnesium Chloride (5) to convert Phosphates in the liquid part into Struvite and an injector for inserting air (6),
- an Ammonia converter (8) having an injector (9) for increasing the pH level in the liquid Struvite (7) to convert the Ammonium into Ammonia,
- an Ammonium Chloride reactor having dosing means (12) for adding Hydrochloric acid to convert Ammonia into Ammonium Chloride,
- reverse Osmose means (17) having reverse Osmose membranes separating Phosphor and Nitrogen containing components from the resulting liquid (18) by reverse Osmose, and
- a fertilizer mixer (13) for mixing the separated Phosphor and Nitrogen containing components (16) with the mixed precipitate Struvite (15) and the solid parts (14) resulting from the separation process (2) to get Struvite (22).

7. Device according to claim 6, wherein the continuous flow Struvite reactor (4) having an injector for inserting air.

8. Device according to claim 6, further having a neutralizing filter to neutralize (20) the remaining liquid (19) to get clean water (21).
